# EUROPÄISCHE PATENTSCHRIFT

(11) **EP 1 215 249 B1**
(45) Veröffentlichungstag und Bekanntmachung des Hinweises auf die Patenterteilung: **28.04.2004**
(21) Anmeldenummer: 01128693.7
(22) Anmeldetag: 01.12.2001
(51) Int. Cl.: C09C 1/58

(54) **Perlruss**
Pearly Carbon Black
Noir de carbone sous forme de perles

(30) Priorität: 16.12.2000 DE 10062942
(43) Veröffentlichungstag der Anmeldung: 19.06.2002
(73) Patentinhaber: Degussa AG, 40474 Düsseldorf (DE)
(72) Erfinder: Otto, Karin, Dr., Fairlawn, Ohio 44333 (US); Zoch, Heinz, Dr., 63477 Maintal (DE); Kopietz, Jan, 58730 Fröndenberg (DE)

(56) Entgegenhaltungen:
- EP-A- 0 924 268
- WO-A-96/01875
- DE-A- 19 623 198

## Beschreibung

Die vorliegende Erfindung betrifft einen Perlruß, ein Verfahren zu seiner Herstellung sowie seine Verwendung.

Bei der Verarbeitung von Industrierußen werden vorzugsweise granulierte Produkte eingesetzt, die häufig als Perlruß bezeichnet werden. Zur Verperlung der Ruße werden großtechnisch zwei unterschiedliche Verfahren verwendet: die Naßverperlung in einer Perlmaschine mit anschließender Trocknung und die Trockenverperlung in einer Perltrommel. Beide Verfahren haben deutlich unterschiedliche Prozeßparameter, die in engem Zusammenhang mit den physikalischen Vorgängen bei der jeweiligen Agglomeration und mit den resultierenden Perleigenschaften stehen (Ullmanns Encyklopädie der technischen Chemie, 4. Auflage, Band 14, Seite 639-640 (1977)).

Aus EP 0 924 268 ist ein Perlruß bekannt, welcher wenigstens ein natürliches und/oder synthetisches Wachs enthält und der durch Verperlen eines pulverförmigen Ausgangsrußes gewonnen wird, wobei der Gehalt des Perlrußes an Wachsen 1 bis weniger als 10 Gew.-%, bezogen auf das Gesamtgewicht des Perlrußes, beträgt und daß die Einzelperlhärte des Perlrußes größer als 0,15 N ist.

Ferner sind aus WO 96/01875 Perlruße bekannt, die 10 bis weniger als 50 Gew.-% einer organischen Verbindung oder eine Mischung von organischen Verbindungen enthalten, wobei die organischen Verbindungen (a) einen Schmelzpunkt von mindestens 25°C, (b) einen Zerfall oder Abbau von weniger als 5 % im geschmolzenen Zustand und bei einer Temperatur, die zur Bildung eines agglomerierten Rußpellets ausreicht, (c) eine Viskosität unter 2 Pas bei einer Schergeschwindigkeit von 10 s⁻¹ im geschmolzenen Zustand und bei einer Temperatur, die zur Bildung von agglomerierten Rußpellets ausreicht, und (d) Benetzung des Rußes in geschmolzenem Zustand aufweist.

Nachteil der bekannten Perlruße ist die schlechte Dispergierbarkeit bei vorgegebener Perlhärte.

Aufgabe der vorliegenden Erfindung ist es, einen Perlruß herzustellen mit verbesserter Dispergierbarkeit, Scheuerfestigkeit, Fließverhalten, Transportstabilität.

Gegenstand der Erfindung ist ein Perlruß, welcher dadurch gekennzeichnet ist, daß dieser mindestens ein natürliches oder synthetisches Wachs als Perladditiv und mindestens ein synthetisches Öl enthält. Der Perladditivgehalt kann 0,1 bis weniger als 10 Gew.-%, vorzugsweise 1 bis 5 Gew.-%, und der Ölgehalt 1 bis 12 Gew.-%, vorzugsweise 4 bis 8 Gew.-%, bezogen auf sein Gesamtgewicht, betragen. Die Einzelperlhärte der 0,5 mm - 0,71 mm Perlfraktion kann größer als 2 g sein.

Das Perladditiv kann öllöslich sein. Die zur Herstellung des Rußes verwendeten Perladditive sind sowohl natürliche als auch synthetische Wachse. Einen guten Überblick über die gemäß der Erfindung geeigneten Wachse gibt Ullmann's Encyclopedia of Industrial Chemistry, Vol. A28, Seiten 103 bis 163 von 1996, Karsten, Lackrohstoff-Tabellen, 9.Auflage, Vincentz Verlag, Kapitel 33, Seiten 558-569 (1992), Römpp Lexikon "Lacke und Druckfarben", Georg Thieme Verlag, Seiten 157-162 (1998) und "The Printing Ink Manual", Fourth Edition, VNR International, Chapter 4, Section VII "Waxes", Seiten 249-257 (1988). Bevorzugt können solche Wachse verwendet werden, die zur Herstellung der Fertigprodukte, in die der Perlruß eingearbeitet werden soll, üblicherweise Verwendung finden. Das Verfahren erlaubt die homogene Aufbringung auch kleinerer Mengen Wachs und damit eine verbesserte Wirkung im Vergleich zum Einsatz gleicher Mengen reinen Wachses. Der durch den Perlruß in das Fertigprodukt eingebrachte Wachsanteil kann aufgrund seiner homogenen Verteilung auf der Rußoberfläche bedingt durch die Verdünnung mit dem Perlöl, zumeist geringer gehalten werden, als dies bei einer üblichen Verarbeitung möglich wäre. Dadurch wird die Freiheit bezüglich des Wachsgehaltes im Fertigprodukt durch den Perlruß minimal eingeschränkt. Vorzugsweise kann als Wachs ein Paraffinwachs oder eine Mischung von raffinierten KW-Wachsen verwendet werden.

Ferner können als Perladditive Harze, bevorzugt Bitumenlösungen, eingesetzt werden. Einen Überblick über die gemäß der Erfindung geeigneten Harze gibt Karsten, Lackrohstoff-Tabellen, 9.Auflage, Vincentz Verlag, Kapitel 1-32, Seiten 55-558 (1992), Römpp Lexikon "Lacke und Druckfarben", Georg Thieme Verlag, Seiten 157-162 (1998), "The Printing Ink Manual", Fourth Edition, VNR International, Chapter 4, Section IV "Resins", Seiten 192-224 (1988) und Printing Materials: Science and Technology, Bob Thompson Pira International, Vehicles, Oils, Resins, Seiten 338-340 (1998).

Ferner können als Perladditive Mischungen von Wachsen, Mischungen von Harzen und Mischungen von Wachsen und Harzen eingesetzt werden.

Als synthetisches Öl kann ein Mineralöl, vorzugsweise napthenisches Öl, verwendet werden. Einen Überblick über die gemäß der Erfindung geeigneten synthetischen Öle gibt Karsten, Lackrohstoff-Tabellen, 9.Auflage, Vincentz Verlag, Kapitel 37, Seiten 601-620 (1992), Römpp Lexikon "Lacke und Druckfarben", Georg Thieme Verlag, Seiten 157-162 (1998), "The Printing Ink Manual", Fourth Edition, VNR International, Chapter 4, Section III "Oils", Seiten 188-191 und Section V "Solvents", Seiten 225-243 (1988) und Printing Materials: Science and Technology, Bob Thompson Pira International, Vehicles, Oils, Resins, Seiten 342 (1998).

Die Gesamtperlhärte des erfindungsgemäßen Perlrußes kann größer 6 kg, vorzugsweise größer 7 kg, sein. Die Perlfestigkeit der 0,5 mm - 0,71 mm Perlfraktion kann größer 70 KPa, vorzugsweise größer 80 KPa, sein. Die Perlfestigkeit der 0,71 mm - 1,00 mm Perlfraktion kann größer 60 KPa, vorzugsweise größer 68 KPa, sein. Der Mittelwert der Einzelperlhärte der 0,71 - 1,00 mm Perlfraktion kann größer 3 g sein.

Als Ausgangsruß können Flamm-, Channel-, Gas- oder Furnaceruße verwendet werden. Vorzugsweise können Ausgangsruße mit einer DBP-Adsorption zwischen 40 und 250 ml/100 g und einer Stickstoff-Oberfläche von 5 bis 500 m²/g verwendet werden. Besonders bevorzugt können als Ausgangsruße Corax N 330, Printex 3, Printex 30, Printex 300 und Printex 35 der Firma Degussa-Hüls verwendet werden.

Ein weiterer Gegenstand der Erfindung ist ein Verfahren zur Herstellung des erfindungsgemäßen Perlrußes, welches dadurch gekennzeichnet ist, daß man Pulverruß und Öl-Perladditiv-Mischung mischt. Das Mischen kann in einer Perlmaschine, einem kontinuierlichen oder diskontinuierlichen Mischer oder einer Mühle, zum Beispiel einer Luftstrahlmühle oder Hammermühle, erfolgen.

In einer Ausführungsform kann der erfindungsgemäße Perlruß in einer Perlmaschine mit Stachelwelle hergestellt werden, wobei die Perlmaschine einen Einlaufbereich, einen Misch- und Granulationsbereich und einen Auslaufbereich aufweist, durch Zuführen von Pulverruß in den Einlaufbereich der Perlmaschine, kontinuierliches Entnehmen des Rußes am Auslauf der Perlmaschine und Verdüsung der Öl-Perladditiv-Mischung auf den noch pulverförmigen Ausgangsruß vor der Perlmaschine oder im ersten Drittel der Perlmaschine.

Die Perlmaschine kann beheizbar sein.

Gemäß Erfindung kann eine Vorrichtung gemäß DE 196 23 198 eingesetzt werden.

Für die Herstellung des erfindungsgemäßen Perlrußes kann die Drehzahl der Stachelwelle so eingestellt werden, daß die Umfangsgeschwindigkeit der Stachelspitzen Werte zwischen 1 und 30 m/s annimmt. Die mittlere Verweilzeit des Rußes in der Perlmaschine kann auf einen Wert zwischen 20 und 600 Sekunden, vorzugsweise zwischen 20 und 180 Sekunden, eingestellt wird.

Die Art der Zugabe der Öl-Perladditiv-Mischung ist von großem Einfluß auf die Qualität des fertigen Perlrußes. Die gewünschte Perlhärte mit einem Gehalt des Perlrußes von weniger als 10 Gew.-% Perladditiv kann erzielt werden, wenn die Öl-Perladditiv-Mischung über den pulverförmigen Ausgangsruß sehr fein mit einer mittleren Tröpfchengröße von weniger als 50 µm verdüst wird.

Zur Verdüsung der Öl-Perladditiv-Mischung kann sie zunächst durch Erwärmen auf eine Temperatur, welche zwischen der Schmelztemperatur und der Zersetzungstemperatur des Perladditivs liegt, aufgeschmolzen und dann einer Sprühdüse zugeführt werden. Als geeignet für die Zwecke der Erfindung kann die Verdüsung der Öl-Perladditiv-Mischung mit einer Zweistoffdüse erfolgen. Durch Verdüsen der Öl-Perladditiv-Mischung mit Druckluft von 6 bar können mittlere Tröpfchengrößen von etwa 20 µm erhalten werden. Ferner kann die Verdüsung mit einer Druckzerstäubung erfolgen.

Neben der Art der Verdüsung der Öl-Perladditiv-Mischung ist auch der Ort der Verdüsung von wesentlichem Einfluß auf die Qualität des sich bildenden Perlrußes. Die erfindungsgemäße einsetzbare Perlmaschine kann aus einem liegend angeordneten, feststehenden Rohr (Stator) mit einer sich darin drehenden Stachelwelle (Rotor) bestehen. Die Perlmaschine besitzt einen Einlaufbereich, in dem der pulverförmige Ausgangsruß der Perlmaschine zugeführt wird. In diesem Bereich befindet sich eine Förderschnecke, die dem zugeführten Ruß eine Bewegungskomponente in axialer Richtung aufprägt. An den Einlaufbereich schließt sich der eigentliche Misch- und Granulationsbereich an, in dem der Ruß zunächst mit der Öl-Perladditiv-Mischung belegt wird und in Abhängigkeit von den Einstellparametern durch mechanische Einwirkung der sich drehenden Stacheln und durch Abrollen an der Innenwand des Stators agglomerieren kann.

Je nach Konstruktion der Perlmaschine können die einzelnen Bereiche der Perlmaschine unterschiedliche Größen aufweisen. In jedem Fall sollten Einlauf- und Auslaufbereich zu Gunsten des Misch- und Granulationsbereichs möglichst klein gehalten werden. Um eine möglichst homogene Verteilung der Öl-Perladditiv-Mischung über den gesamten Querschnitt der Rußperlen zu erhalten, ist es erforderlich, die Öl-Perladditiv-Mischung vor der Perlmaschine oder im ersten Drittel der Perlmaschine auf den Ruß zu verdüsen. Die Einbringung der Öl-Perladditiv-Mischung in einem späteren Stadium der Perlbildung führt zu einem inhomogenen Aufbau der Rußperlen und damit zu einer verringerten Perlhärte.

Eine weitere Verbesserung der Homogenität der Einmischung der Öl-Perladditiv-Mischung in den Ruß kann man erhalten, wenn zur Verdüsung mehrere Sprühdüsen eingesetzt werden, die in einer Ebene senkrecht zur Stachelwelle am Umfang des Stators verteilt sind. Die Zahl der Düsen kann zweckmäßiger Weise auf eins bis sechs begrenzt werden. Die Düsen können dabei in einer Ebene senkrecht zur Stachelwelle angeordnet werden, um eine gute Homogenität der Einmischung zu gewährleisten.

Durch einen axialen Versatz können Öl und Perladditiv zu unterschiedlichen Agglomerationsstadien eingemischt werden.

Der Pulverruß kann dem Granulationsbereich der Perlmaschine mit Hilfe einer Förderschnecke zugeführt werden. Der Rußdurchsatz beziehungsweise Mengendurchsatz der Perlmaschine ist daher gleich der Förderrate der Förderschnecke und kann somit in weiten Grenzen eingestellt werden. Füllmenge und Verweilzeit können durch Anheben des Auslaufbereiches gegenüber dem Einlaufbereich verlängert werden. Der sich dabei ergebende Winkel zwischen der Achse der Perlmaschine und der Horizontalen kann etwa zwischen 0 und 15° verändert werden.

Füllmenge und Verweilzeit können weiterhin durch die Drehzahl der Stachelwelle beeinflußt werden. Bei gleichbleibender Rußzufuhr (konstanter Rußdurchsatz) verringern sich mit steigender Drehzahl die Füllmenge und Verweilzeit proportional zueinander.

Die bevorzugten Verweilzeiten für die Herstellung des erfindungsgemäßen Perlrußes können im Bereich zwischen 20 und 180 Sekunden liegen. Unterhalb von 20 Sekunden kann der Agglomerationsvorgang mehr oder weniger unvollständig sein. Das Aggregat fungiert in diesem Fall als Mischer, liefert aber dennoch einen gewissen Anteil Perlkeime, die die Granulation in der Perltrommel unterstützen. Verweilzeiten von mehr als 600 Sekunden sind gewöhnlich wegen der nach oben begrenzten Füllmenge nur bei geringen Rußdurchsätzen möglich.

Zur Einleitung der Agglomeration kann es zweckmäßig sein, dem Pulverruß Perlruß als Agglomerationskeime (im folgenden auch als Impfgut bezeichnet) beizumengen. Bevorzugt kann Perlruß derselben Rußtype, die verperlt werden soll, eingesetzt werden. Abhängig von den Perleigenschaften des Rußes können ihm bis zu 60 Gew.-% Perlruß zugemischt werden. Bevorzugt kann der Perlruß in einer Menge von 5 bis 40 Gew.-% dem Pulverruß zugemischt werden. Bei leicht zu verperlenden Rußtypen kann die Zugabe von Perlruß ganz unterbleiben oder kurze Zeit nach Beginn der Granulation beendet werden.

Eine weitere Verbesserung der Verperlung kann erzielt werden, wenn der Pulverruß auf Schüttdichten im Bereich zwischen 150 und 350 g/l verdichtet wird, bevor er der Perlmaschine zugeführt wird. Die Vorverdichtung kann in bekannter Weise zum Beispiel mit Hilfe von Vakuumfilterwalzen vorgenommen werden.

Der erfindungsgemäße Perlruß läßt sich vorteilhaft als Füllstoff und/oder Pigment in Gummi- und Kunststoffartikeln sowie als Pigment für die Herstellung von Druckfarben einsetzen.

Er zeichnet sich infolge seiner günstigen Perlhärte durch gute Transport- und Dosiereigenschaften aus und läßt sich dennoch leicht dispergieren.

Die verbesserte Perlhärte sowie Perlfestigkeit kann unter Beibehaltung der guten Dispergierbarkeit der Granulate erzielt werden. In der Attritordispergierung weist der erfindungsgemäße Ruß eine gleich gute Dispergierbarkeit wie der Pulverruß auf und besitzt zudem die fördertechnischen Vorteile eines Perlrußes. Die erfindungsgemäßen Perlruße haben eine höhere Scheuerfestigkeit in Druckfarben als die öl- oder wachsgeperlten Vergleichsruße.

Im folgenden wird die Erfindung anhand der Zeichnungen näher erläutert. Es zeigen
- Figur 1:: Granulator mit Stachelwelle zur Herstellung des erfindungsgemäßen Perlrußes.
- Figur 2:: Verfahrensfließbild zur Herstellung des erfindungsgemäßen Perlrußes.

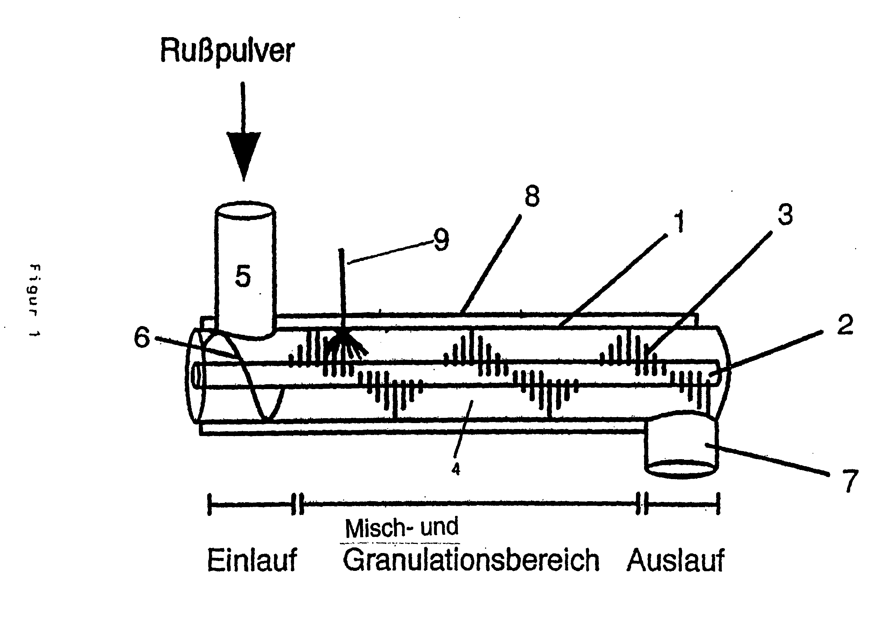

Gemäß Figur 1 kann der erfindungsgemäße Perlruß mit einer Perlmaschine hergestellt werden. Der Aufbau einer solchen Perlmaschine ist schematisch in Figur 1 dargestellt. Die Perlmaschine besteht aus einem liegend angeordneten feststehenden Rohr 1, dem Stator, und einer darin axial angeordneten sich drehenden Stachelwelle 2 mit den wendelförmig angeordneten Stacheln 3. Zwischen der Stachelwelle 2 und dem Stator 1 befindet sich der Perlraum 4 der Perlmaschine. Der Pulverruß wird dem Granulator am Einlauf 5 zugeführt. Im Bereich des Einlaufs befindet sich auf der Stachelwelle eine Förderschnecke 6, die den Pulverruß in axialer Richtung zum Auslauf 7 fördert. Der Stator 1 ist doppelwandig ausgeführt und erlaubt die Temperierung der Statorwandung mit Hilfe einer Flüssigkeit oder Dampf 8. Im ersten Drittel des Granulationsbereiches des Stators befinden sich Durchgangsbohrungen, durch die Sprühdüsen 9 für die Zugabe der Öl-Perladditiv-Mischung eingeführt werden können.

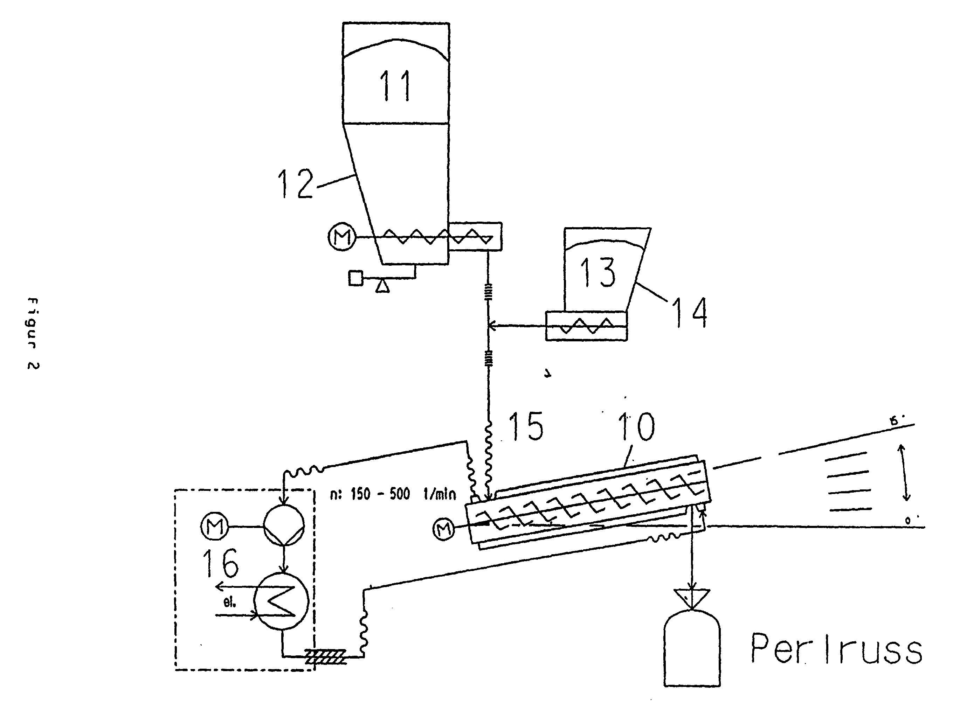

Figur 2 zeigt das Verfahrensfließbild für die Herstellung des erfindungsgemäßen Perlrußes. Die Perlmaschine 10 kann mit ihrer Achse zur Einstellung der Verweilzeit gegenüber der Horizontalen um einen Neigungswinkel von 0 bis 15° geneigt werden. Hierzu wird der Auslauf der Perlmaschine gegenüber dem Einlauf entsprechend angehoben. Pulverruß 11 und gegebenenfalls Impfgut 13 werden aus den Vorlagebehältern 12 und 14 dem Einlauf 15 der Perlmaschine 10 oder der Perltrommel zugeführt. Der Stator der Perlmaschine wird mit Hilfe des Thermostaten 16 auf eine gewünschte Temperatur eingestellt.

### Beispiele:

Als Ausgangsruß wird ein Printex 30 Pulver (Tabelle 1) verwendet.

**Tabelle 1**

| Printex 30 P | Einheit | |
|---|---|---|
| Schüttdichte (ASTM D 1513-99) | g/l | 174 |
| Flüchtige Anteile(DIN 53552) | % | 1,3 |
| Jodzahl (DIN 53582) | mg/g | 86 |
| CTAB (ASTM D-3765) | m²/g | 74 |
| DBP (DIN 53601) | ml/100g | 105 |

Die Versuchseinstellungen sind in Tabelle 2 dargestellt.

**Tabelle 2**

| | Ölperlung Vergleichsbeispiel 1 | Wachsperlung Vergleichsbeispiel 2 | Öl-Wachs-Perlung Beispiel 3 |
|---|---|---|---|
| **Fluffy-Ruß** | | | |
| -Sorte | Printex 30 P | Printex 30 P | Printex 30 P |
| -Durchsatz [kg/h] | 40 | 40 | 40 |

| **Impfgut** | | | |
|---|---|---|---|
| -Sorte | Printex 30, ölgeperlt | Printex 30, wachsgeperlt | Printex 30, ölwachsgeperlt |
| -Menge [kg/h] | 2 | 2 | 2 |

| **Additiv** | | | |
|---|---|---|---|
| -Anteil Wachs/Öl [%] | 0/6 | 3/0 | 3/6 |
| -Sorte | Gravex Öl | Protektor G35 | Gravex Öl/Protektor G35 |
| -Menge (Additiv) [kg/h] | 2,4 | 1,2 | 3,6 |

| **Dosierstation** | | | |
|---|---|---|---|
| -Pumpenhub [mm] | 4,4 | 2,6 | 6,9 |
| -Düsenart | Zweistoff | Zweistoff | Zweistoff |
| -Düse [mm] | 0,8 | 0,8 | 0,8 |
| -Durchsatz Düsenluft [Nm³/h] | 1,5 | 1,5 | 1,5 |
| -Eindüsposition [cm] von Einlaufmitte 5 | 80 | 80 | 80 |

| **Vorverdichtung** | | | |
|---|---|---|---|
| -Drehzahl (Walze) [UpM] | 3 | 3 | 3 |
| -Vakuum [mbar] | 890 | 889 | 884 |
| -Spalt [mm] | 3 | 3 | 3 |

| **Perlmaschine** | | | |
|---|---|---|---|
| -Drehzahl [min⁻¹] | 285 | 285 | 285 |
| -Stromaufnahme [A] | 18 | 18 | 18 |
| -Neigungswinkel [°] | 10 | 10 | 10 |
| -Manteltemperatur [°C] | 110 | 110 | 110 |
| -Verweilzeit [s] | 76 | 76 | 76 |
| Umfangsgeschwindigkeit [m/s] | 2,98 | 2,98 | 2,98 |
| -Schüttdichte [g/l] | 276 | 260 | 284 |

| **Nachgranulation** | | | |
|---|---|---|---|
| -Apparat | Granuliertrommel | Granuliertrommel | Granuliertrommel |
| -Drehzahl Trommel [min⁻¹] | 20 | 20 | 20 |
| -Trommeldurchmesser [mm] | 400 | 400 | 400 |
| -Temperatur [°C] | 70 | 70 | 70 |
| -Zeit [std] | 2 | 2 | 2 |
| -Schüttdichte [g/l] | 288 | 290 | 300 |

Die analytischen Ergebnisse sind in Tabelle 3 dargestellt.

**Tabelle 3**

| **Analytische Daten** | Ölperlung Vergleichsbeispiel 1 | Wachsperlung Vergleichsbeispiel 2 | Öl-Wachs-Perlung Beispiel 3 | Printex 30 P Ausgangsruß |
|---|---|---|---|---|
| Gesamtperlhärte [kg] (Nachgranulation) | 6 | 5 | 9 | - |

| **Einzelperlhärte** | | | | - |
|---|---|---|---|---|
| **0,5 - 0,71 mm** | | | | - |
| Mittelwert [g] | 1,81 | 1,27 | 2,44 | - |
| Standardabw. [g] | 0,71 | 0,42 | 0,87 | - |
| 5 härteste Perlen [g] | 2,61 | 1,81 | 3,52 | - |
| min Härte [g] | 0,61 | 0,6 | 0,94 | - |
| max Härte [g] | 2,82 | 2,06 | 4,49 | - |
| Festigkeit [kPa] | 60,89 | 46,46 | 89,2 | - |

| **0,71 - 1,00 mm** | | | | - |
|---|---|---|---|---|
| Mittelwert [g] | 2,60 | 2,93 | 4,31 | - |
| Standardabw. [g] | 1,09 | 1,08 | 1,10 | - |
| 5 härteste [g] Perlen | 3,86 | 4,22 | 5,58 | - |
| min Härte [g] | 0,67 | 0,96 | 1,92 | - |
| max Härte [g] | 4,37 | 4,52 | 6,38 | - |
| Festigkeit [kPa] | 47,59 | 46,37 | 75,26 | - |

| **1,0 - 1,4 mm** | | | | - |
|---|---|---|---|---|
| Mittelwert [g] | 4,44 | 4,89 | 6,95 | - |
| Standardabw. [g] | 1,77 | 1,47 | 2,91 | - |
| 5 härteste Perlen [g] | 6,77 | 6,91 | 10,64 | - |
| min Härte [g] | 2,17 | 3,25 | 2,60 | - |
| max Härte [g] | 7,91 | 8,74 | 13,83 | - |
| Festigkeit [kPa] | 41,66 | 49,64 | 67,2 | - |
| Vordispergierung 45' [µm] | 180 | 180 | 180 | 50 |
| Attritordispergierung 15' [µm] | 10 | 15 | 8 | 8 |
| Attritordispergierung 30' [µm] | <5 | <5 | <5 | <5 |
| Fließplatte 90° 10' Fließfähigkeit der Druckfarbe | 130 | 129 | 170 | 99 |

### Bestimmung der Dispergierbarkeit ölgeperlter Pigmentruße (Vordispergierung)

### Geräte und Reagenzien:

- Dissolver, Dispermat der Firma Getzmann mit einer Maximaldrehzahl von 20 000 U min⁻¹;
- Dissolverscheibe als Zahnscheibe mit einem Durchmesser von 25 mm;
- Stahlzylinder als Dispergiergefäß mit folgenden Abmessungen; d = 55 mm, H = 200 mm;
- Grindometer nach DIN 53 203
- Bitumenlösung 169 der Firma Haltermann,
- Gravex 942 der Firma Shell,

### Durchführung

- Zusammensetzung und Herstellung des Prüffirnis
   In einer Kasserolle werden folgende Bestandteile eingewogen und homogenisiert;
   500,0 g Bitumenlösung 169
   500,0 g Gravex 942
   Zur Überprüfung eines neu hergestellten Prüffirnis wird ein Ruß-Referenzmuster mit bekannten Dispergierverlauf herangezogen.
- Durchführung des Dispergiertests

In dem Dispergiergefäß werden folgende Bestandteile eingewogen:
20,0 g Pigmentruß
80,0 g Firnis

Der Pigmentruß wird vorsichtig durch langsames Rühren in das Bindemittel eingebracht und benetzt. Alsdann folgt der Dispergiertest ohne Kühlung bei einer Drehzahl der Dissolverscheibe von 15.300 U min⁻¹ = etwa 20 m/s in Dispergierstufen von 15 min. Nach jeder Dispergierstufe wird eine kleine Probe entnommen und mit Hilfe des Grindometers hinsichtlich des erreichten Verteilungszustandes des Rußes geprüft. Die Gesamtdispergierzeit beträgt 45 min.

### Ergebnisse:

Als Ergebnis werden diejenigen Grindometerwerte registriert, die nach den einzelnen Dispergierstufen gemessen werden, um somit den Dispergierverlauf darstellen zu können. Als Maß für die Dispergierbarkeit dient derjenige Grindometerwert, der nach 45 min Dispergierzeit gemessen wird.

### Bestimmung der drucktechnischen Leistungsfähigkeit von Pigmentrußen in einer Zeitungsfarbe (Attritordispergierung)

- Laborwaage, Wägebereich 0,1-5500,0 g,
- Labordissolver, zum Beispiel Pendraulik, Durchmesser der Zahnscheibe 60 mm,
- Attritor beziehungsweise Rührwerkskugelmühle, die folgenden Anforderungen entsprechen soll: Rührwerk mit 3 untereinander exzentrisch angeordneten Ringelementen, jeweils um 120° versetzt; Rührwerksdrehzahl: 2800 U min⁻¹;
   - Mahlbehälter:: → Inhalt:brutto 500 ml, Durchmesser 90 mm
   → Nutzinhalt 300 ml
   Stahlkugeln als Mahlkörper mit einem Durchmesser von 3 mm;
   benötigte Einsatzmenge an Stahlkugeln: 1.250 g;
- Grindometer nach DIN 53 203;
- Densitometer Macbeth RD 918,
- Zeitungspapier 52 g/m²
- Schnellsieb 280 µ der Firma Drekopf,
- Albertol KP 172, phenolmodifiziertes Kolophoniumharz, Firma Hoechst AG,
- Albertol KP 111, phenolmodifiziertes Kolophoniumharz, Firma Hoechst AG,
- Gilsonite EWC 7214, Asphaltharz, Firma Worlee,
- Gravex 917, Mineralöl, Firma Shell,

### Durchführung

- Zusammensetzung des Rollenoffsetfirnis
In einer Kasserolle werden folgende Bestandteile eingewogen:

| | |
|---|---|
| 120 g | Albertol KP 172 |
| 120 g | Albertol KP 111 |
| 160 g | Gilsonite |
| 600 g | Gravex |
| 1000 g | |

Zweckmäßigerweise wird die Flüssigkomponente Gravex vorgelegt. Es folgt die Zugabe der festen Harze Albertol KP 172, Albertol KP 111 und Gilsonite, die unter Rühren bei 170°C gelöst werden. Der durch Verdunsten entstandene Verlust an Mineralöl wird ausgeglichen. Den fertigen Firnis durch das Sieb (280 µ) passieren. Nach Erkalten ist der Firnis gebrauchsfertig.
- Herstellung der Druckfarbe
Die Zusammensetzung der Druckfarbe lautet:

| | |
|---|---|
| 48,0 g | Pigmentruß |
| 201,0 g | Firnis |
| 51,0 g | Gravex |
| 300,0 g | |

Firnis und Gravex werden homogenisiert. die Zugabe des Pigmentrußes erfolgt portionsweise. Mit Hilfe des Dissolvers wird 10 min bei 4000 U min⁻¹ vordispergiert. Im Attritor ohne Kühlung in Dispergierstufen von jeweils 15 min dispergieren. Nach jeder Dispergierstufe wird eine kleine Probe zur Bestimmung des erreichten Verteilungszustandes mit Hilfe des Grindometers entnommen. Die Dispergierung ist beendet, sobald ein Grindometerwert von < 5 µ gemessen wird. Die benötigte Dispergierzeit wird registriert.

### Bestimmung des Fließverhaltens einer Druckfarbe durch die Fließplatte

Der zu untersuchende Ruß wird zu einer praxisnahen Druckfarbe verarbeitet.

Eine dosierte Menge Druckfarbe wird auf die Glasplatte appliziert und die Glasplatte senkrecht aufgestellt (90°). Nach einer festgelegten Zeit wird die Laufstrecke der Druckfarbe in mm gemessen. Daraus kann eine Aussage über die Fließfähigkeit einer Druckfarbe gemacht werden.

Die Gesamtperlhärte wird nach ASTM D 1937-98 und die Einzelperlhärte wird nach ASTM D 5230-99 gemessen.

Der erfindungsgemäße Perlruß (Beispiel 3) zeigt Vorteile gegenüber den ölgeperlten Rußen (Vergleichsbeispiel 1) und den wachsgeperlten Rußen (Vergleichsbeispiel 2). Die Gesamtperlhärte, die Einzelperlhärte und Perlfestigkeit der 0,5 mm - 0,71 mm und 0,71 mm - 1,00 mm Perlfraktionen der erfindungsgemäßen Perlruße sind deutlich erhöht.

Die Verbesserung der Perlhärten sowie Perlfestigkeiten im Vergleich zu den Verleichsbeispielen 1 und 2 kann unter Beibehaltung der guten Dispergierbarkeit der Granulate erzielt werden.

Die Dispergierbarkeit in der Attritordispergierung und das Fließverhalten ist verbessert im Vergleich zu dem ölbeziehungsweise wachsgeperlten Referenzrußen.

In der Attritordispergierung weist der erfindungsgemäße Ruß eine gleich gute Dispergierbarkeit wie der eingesetzte Pulverruß auf und besitzt zudem die fördertechnischen Vorteile eines Perlrußes.

Bei gleicher oder höherer Perlhärte der Öl-Perladditiv Ruße im Vergleich zu den Rußen des Standes der Technik werden verbesserte Dispergierbarkeiten erzielt.
- Gravex Öl: Shell AG
hochraffiniertes Mineralöl
- Protektor G35: Paramelt B.V.
Mischung von raffinierten KW-Wachsen

## Patentansprüche

1. Perlruß, **dadurch gekennzeichnet, daß** dieser mindestens ein natürliches oder synthetisches Wachs als Perladditiv und mindestens ein synthetisches Öl enthält.

2. Perlruß nach Anspruch 1, **dadurch gekennzeichnet, daß** der Perladditivgehalt 0,1 bis weniger als 10 Gew.-% und der Ölgehalt 1 bis 12 Gew.-%, bezogen auf sein Gesamtgewicht, beträgt.

3. Perlruß nach Anspruch 1, **dadurch gekennzeichnet, daß** der Ausgangsruß eine DBP-Adsorption zwischen 40 und 250 ml/100 g und eine Stickstoff-Oberfläche von 5 bis 500 m²/g aufweist.

4. Perlruß nach Anspruch 1, **dadurch gekennzeichnet, daß** es sich bei den Perladditiven um Mischungen von Wachsen oder Mischungen von Wachsen und Harzen handelt.

5. Perlruß nach Anspruch 1, **dadurch gekennzeichnet, daß** es sich bei den synthetischen Ölen um Mineralöle handelt.

6. Verfahren zur Herstellung von Perlruß nach Anspruch 1, **dadurch gekennzeichnet, daß** man Pulverruß und Öl-Perladditiv-Mischung mischt.

7. Verfahren nach Anspruch 6, **dadurch gekennzeichnet, daß** in einer Perlmaschine mit Stachelwelle, wobei die Perlmaschine einen Einlaufbereich, einen Misch- und Granulationsbereich und einen Auslaufbereich aufweist, durch Zuführen von Pulverruß in den Einlaufbereich der Perlmaschine und kontinuierliches Entnehmen des Rußes am Auslauf der Perlmaschine, die Öl-Perladditiv-Mischung vor der Perlmaschine oder im ersten Drittel der Perlmaschine auf den noch pulverförmigen Ausgangsruß verdüst wird.

8. Verfahren nach Anspruch 7, **dadurch gekennzeichnet, daß** die Öl-Perladditiv-Mischung mit Hilfe von 1 bis 6 Düsen über den noch pulverförmigen Ausgangsruß verdüst wird, wobei die Düsen in einer Ebene senkrecht zur Achse der Stachelwelle angeordnet sind.

9. Verfahren nach Anspruch 7, **dadurch gekennzeichnet, daß** man die Verweilzeit des Rußes in der Perlmischung auf einen Wert zwischen 20 und 600 Sekunden einstellt.

10. Verfahren nach Anspruch 7, **dadurch gekennzeichnet, daß** dem Pulverruß bis 60 Gew.-% Perlruß derselben Rußtype als Impfgut zugemischt werden.

11. Verfahren nach Anspruch 7, **dadurch gekennzeichnet, daß** der Pulverruß vor dem Granulieren auf eine Schüttdichte von 150 bis 350 g/l vorverdichtet wird.

12. Verwendung des Perlrußes nach den Ansprüchen 1 bis 5 als Füllstoff und/oder Pigment in Gummi- und Kunststoffartikeln und als Pigment zur Herstellung von Druckfarben.

13. Verwendung des Perlrußes nach den Ansprüchen 1 bis 5 zur Verbesserung der Scheuerfestigkeit in Druckfarben.

## Claims

1. Beaded black, **characterised in that** it contains at least one natural or synthetic wax as pelletising additive and at least one synthetic oil.

2. Beaded black according to claim 1, **characterised in that** the pelletising additive content is 0.1 to less than 10 wt.% and the oil content is 1 to 12 wt.%, relative to its total weight.

3. Beaded black according to claim 1, **characterised in that** the starting black displays a DBP adsorption of between 40 and 250 ml/100 g and a nitrogen surface area of 5 to 500 m²/g.

4. Beaded black according to claim 1, **characterised in that** the pelletising additives are mixtures of waxes or mixtures of waxes and resins.

5. Beaded black according to claim 1, **characterised in that** the synthetic oils are mineral oils.

6. Process for the production of beaded black according to claim 1, **characterised in that** powdered carbon black and oil/pelletising additive mixture are mixed together.

7. Process according to claim 6, **characterised in that** in a pelletising machine with a pin shaft, the pelletising machine displaying an intake zone, a mixing and pelletising zone and an outlet zone, the oil/pelletising additive mixture is sprayed onto the starting black, which is still in powder form, ahead of the pelletising machine or in the first third of the pelletising machine, by feeding powdered carbon black into the intake zone of the pelletising machine and continuously removing the carbon black from the outlet of the pelletising machine.

8. Process according to claim 7, **characterised in that** the oil/pelletising additive mixture is sprayed over the starting carbon black, which is still in powder form, by means of 1 to 6 nozzles, the nozzles being arranged on one level perpendicular to the axis of the pin shaft.

9. Process according to claim 7, **characterised in that** the retention time of the carbon black in the pelletising mixture is adjusted to a value between 20 and 600 seconds.

10. Process according to claim 7, **characterised in that** up to 60 wt.% of beaded black in the same grades of carbon black is added to the powdered carbon black as an inoculum.

11. Process according to claim 7, **characterised in that** the powdered carbon black is precompressed to a bulk density of 150 to 350 g/l before pelletisation.

12. Use of the beaded black according to claims 1 to 5 as a filler and/or pigment in rubber and plastic articles and as a pigment for the production of printing inks.

13. Use of the beaded black according to claims 1 to 5 to improve the abrasion resistance in printing inks.

## Revendications

1. Noir de carbone granulé,
**caractérisé en ce qu'**
il contient au moins une cire naturelle ou synthétique servant d'additif de granulation et au moins une huile synthétique.

2. Noir de carbone granulé selon la revendication 1,
**caractérisé en ce que**
la proportion d'additif de granulation est comprise entre 0,1 et moins de 10% en poids, et la proportion d'huile entre 1 et 12% en poids par rapport à son poids total.

3. Noir de carbone granulé selon la revendication 1,
**caractérisé en ce que**
le noir de carbone de départ présente une absorption DBP comprise entre 40 et 250 ml/100 g et une surface d'azote comprise entre 5 et 500 m²/g.

4. Noir de carbone granulé selon la revendication 1,
**caractérisé en ce que**
les additifs de granulation sont des mélanges de cires, des mélanges de résines ou des mélanges de cires et de résines.

5. Noir de carbone granulé selon la revendication 1,
**caractérisé en ce que**
les huiles synthétiques sont des huiles minérales.

6. Procédé de fabrication de noir de carbone granulé selon la revendication 1,
**caractérisé en ce que**
l'on mélange du noir de carbone en poudre et un mélange huile/additif de granulation.

7. Procédé selon la revendication 6,
**caractérisé en ce que**
dans une machine de granulation comportant un cylindre denté, la machine de granulation présentant une zone d'entrée, une zone de mélange et de granulation ainsi qu'une zone de sortie, par amenée de noir en poudre dans la zone d'entrée de la machine de granulation et extraction continuelle du noir de carbone à la sortie de la machine de granulation, la pulvérisation du mélange huile/additif de granulation sur le noir de carbone sortant encore en forme de poudre est effectuée en amont de la machine de granulation ou dans le premier tiers de celle-ci.

8. Procédé selon la revendication 7,
**caractérisé en ce que**
le mélange huile/additif de granulation est pulvérisé à l'aide de 1 à 6 buses sur le noir de carbone de départ encore en forme de poudre, les buses étant disposées dans un plan vertical par rapport à l'axe du cylindre denté.

9. Procédé selon la revendication 7,
**caractérisé en ce que**
le temps de séjour du noir de carbone dans le mélange de granulation est réglé à une valeur comprise entre 20 et 600 secondes.

10. Procédé selon la revendication 7,
**caractérisé en ce que**
l'on ajoute au noir de carbone en poudre jusqu'à 60% en poids de noir de carbone granulé du même type de noir de carbone servant d'agent d'inoculation.

11. Procédé selon la revendication 7,
**caractérisé en ce qu'**
avant la granulation le noir de carbone en poudre est préalablement comprimé sur une densité apparente comprise entre 150 et 350 g/l.

12. Utilisation du noir de carbone granulé selon les revendications 1 à 5, comme substance de remplissage et/ou pigment dans des produits en caoutchouc et en matière plastique ainsi que comme pigment pour la fabrication d'encres d'imprimerie.

13. Utilisation du noir de carbone granulé selon les revendications 1 à 5, pour améliorer la résistance à l'abrasion dans des encres d'imprimerie.
